# EUROPEAN PATENT APPLICATION

(11) **EP 2 750 417 A1**
(43) Date of publication of application: **02.07.2014**
(21) Application number: 12382545.7
(22) Date of filing: 28.12.2012
(51) Int. Cl.: H04W 4/02, H04L 29/08, H04W 4/20, H04L 12/18, H04L 12/58, G06Q 30/02, G01C 21/34, G01C 21/36, H04W 12/02, G06F 17/30, H04W 4/18, G06Q 10/10

(54) **Method for determining points of interest based on user communications and location**

(71) Applicant: Telefónica, S.A., 28013 Madrid (ES)
(72) Inventor: Neystadt, John Eugene, 28013 Madrid (IL); Tome Torres, Maria Jose, 28013 Madrid (ES)
(74) Representative: Carpintero Lopez, Francisco

(57) **Abstract**

Present invention refers to a method for providing recommendations of points of interest to a user of a communication or other online service based on a location. The method comprises the steps of: obtaining communication details or other online event activities from other users of the communication service ; associating a location to the data usage of the other users; storing the location associated to the data usage in a database; making a list comprising locations stored in the database; defining for each location of the list, the nearest point of interest, being the points of interest a list of places previously provided; the user providing a location and requesting for the points of interest within a certain distance from the location provided by the user; ranking the points of interest within the certain distance according to the data usage of other users without disclosing their identity; and providing the user the ranked list of points of interest, enabling users to consult/perform a communication to users that communicated or produced other events at that location without disclosing their identity to him.

## Description

### TECHNICAL FIELD OF THE INVENTION

Present invention generally relates to the field of social networking, more specifically relates to recommendations of points of interest based on previous location of other users, being contacts or not of the user.

### BACKGROUND OF THE INVENTION

A point of interest, or POI, is a specific point location that someone may find useful or interesting. Most consumers use the term when referring to hotels, restaurants, malls, pubs, campsites, fuel stations or any other category. Current technology allow to include the points of interest to geosocial networks, which are a specific type of social network in which geographic services and capabilities such as geolocation are used to enable additional social dynamics.

User-submitted location data or geolocation techniques allow social networks to connect and coordinate users with local people or events that match their interests. Geolocation on web-based social network services can be IP-based or use hotspot trilateration. For mobile social networks, texted location information or mobile phone tracking enable location-based services to enrich social networking.

Mobile communications devices have awareness of their location based on GPS modules embedded in the handset, WiFi signal triangulation or any other mean. When users perform their communications, their location is provided to communication systems. This information is then analyzed to figure out which people have been in which places, and allow providing this information to other people, without disclosing too many details that will hurt users privacy.

There are some inventions in the prior art running the idea that people can use mobile devices to interact with their environment like has been implemented by social network services like Foursquare, Google Latitude, Google Places and Facebook check-ins. These systems also enable users to share their location in the run time and observe locations of other users.

Often, people are facing a choice of place selection, such as which restaurant, tourist location or show to go to. This selection could be based on knowledge on where their trusted contacts go, however there is no easy way for the users to discover this information because proposed solutions usually require people explicitly state their opinion about a place (understood as a point of interest) and they also ignores the fact people trust their contact more that unknown people.

Filtering recommendation systems that offer lists of POIs to their users as Foursquare, Google Latitude, Google Places or Facebook, gather the information from an explicit check-in action from the users.

Another alternative solution can be found in the patent application US20110142016A1 "Ad hoc networking based on content and location" which discloses a system where users could be matched based on the users' common interests and experiences. Common interests and experiences of two or more users located close to each other could be identified from content, including automatically created usage data of the mobile devices. Usage data of a mobile device could be created based on activities performed on the mobile device (e.g., songs downloaded), a trajectory of the mobile device (e.g., places traveled), or other public data available from the mobile device (e.g., pictures shared). Each of the users could be notified that another user having the common interests and experiences is close by. A secure means of initiating communication could be provided to the users to facilitate communication between the users. This solution brings up the subject of privacy control owning to the fact that a user has to disclose his place to other users. The system does not automatically use information on the geographical position of the user's mobile device, so the users have to specify manually the places they visit, through a check-in action, otherwise the location information will not be used for places recommendation.

Therefore, the state of art is missing a method for place recommendations which actually provides useful information based on the location of the users, mainly if they are users from the contact list of the user looking for a recommendation, taking the location from manually check-in action means a biased information for the user and the result is a non-optimal solution.

### SUMMARY OF THE INVENTION

Present invention solves the aforementioned problem of taking location information allowing the users to take advantage of their mobile communications for carrying out a seamless check-in process. In fact, proposed invention, provides a method for providing points of interest to a user of a communication service based on a location, the method is characterized by comprising the steps of:
a) obtaining data usage from other users of the communication service (1);
b) associating (5) a location to the data usage of the other users;
c) storing (6) the location associated to the data usage in a database;
d) making a list (7) comprising locations stored in the database;
e) defining (14) for each location of the list, the nearest point of interest, being the points of interest a list of places previously provided;
f) the user providing a location and requesting (11) for the points of interest within a certain distance from the location provided by the user;
g) ranking the points of interest within the certain distance according to the data usage of other users;
h) providing the user the ranked list of points of interest.

The invention may comprise, in one particular embodiment, the step of a user uploading (16) a contact list to a contact database (13). The contacts stored in the contact database often are more reliable than other users, thus in one embodiment of the invention, data usage of users who are not stored in the contact database are discarded. Another criteria to discard data usage of users is time. One of the embodiments discards the data usage of users outside a time window.

Data usage of users, according to different embodiments of the invention, may comprise event such as calls, SMS, MMS, video calls, IM, email, image uploading, web browsing, social network activities or any other online action, call details records (CDRs). According to the number of events generated, the points of interest may be ranked.

Locations may be provided by the user through a GPS module embedded in a terminal mobile. Thus, he can indicate his position in geographical coordenates for example, although it can also be provided just a location of interest.

One embodiment of the invention may comprise the user sending his location to a server, being said location available for all the users of the communication service, and requesting for communicating with users who have performed communications or registered online events within a certain distance from the location of the user without disclosing to user which other users have produced events at that place. Therefore, the privacy of the users is preserved.

The invention may further comprise the user sending a request for communication to all the users of the communication service whose data usage has been associated to a point of interest within a time window, being the identities of the users preserved.

Another aspect of the invention refers to a system for providing points of interest to a user of a communication service based on a location. The system comprises:
- a database (6) for storing data usage of users and locations;
- a processing module (7) for making a list comprising locations stored in the database associated to the users and the data usage;
- a distance module to defining for each location of the list, the nearest point of interest, being the points of interest a list of places previously provided;
- a places database (10) for storing the points of interest;
- a service module (12) for ranking the points of interest and providing the user the ranked list of points of interest.

Also a contact database may be included to store a contact list of the user.

And a last aspect of the invention refers to a computer program product comprising computer program code adapted to perform the method of the invention, when said program code is executed on a computer, a digital signal processor, a field-programmable gate array, an application-specific integrated circuit, a micro-processor, a micro-controller, or any other form of programmable hardware.

### DESCRIPTION OF THE DRAWINGS

To complete the description that is being made and with the object of assisting in a better understanding of the characteristics of the invention, in accordance with a preferred example of practical embodiment thereof, accompanying said description as an integral part thereof, is a set of drawings wherein, by way of illustration and not restrictively, the following has been represented:

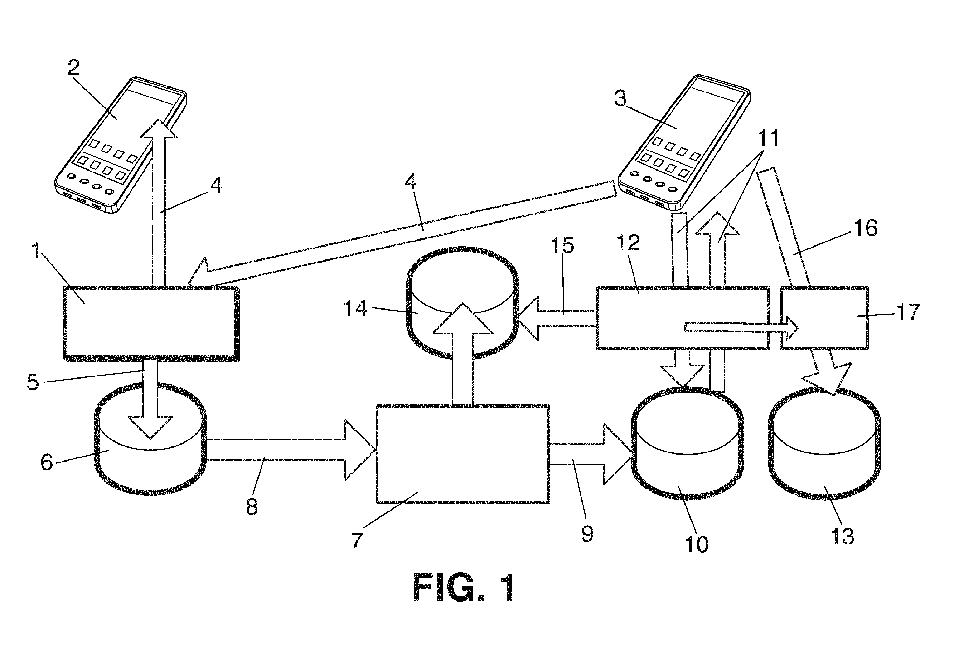

**Figure 1****.-** shows a block diagram according to one embodiment of the invention.

### DETAILED DESCRIPTION OF THE INVENTION

According to a particular embodiment of the invention a detailed description of proposed invention is disclosed below.

A typical communication service (1), enables user X (3) and user Y (2) to establish a communication (4), via calls, messages and other communication means. The communications can be done via SIP, XMPP, GSM, Email or any other protocol. The users X and Y are registered in the communication service with a mobile device and for each communication, the communication service (1), creates (5) Communication Details Records (CDRs hereafter) and stores them in the Database (6). A call detail record (CDR) is a raw file or a CSV/JSON/XML structured file containing data usage, or information about recent system usage, such as the identities of sources, the identities of destinations (endpoints), the duration of each call, the amount billed for each call, and the total usage time in the billing period.

Mobile devices of user X and Y are equipped with GPS module which provide geo-location, in geographical coordinates for example, and other location modules that can also provide location by WiFi triangulation for example or just from the cellular network, and since there is a communication application running on user's mobile device it may be included user's geo-location coordinates in every communication event initiated by the user, and the geo-location coordinates can be stored in the CDR database (6) too. Thus the locations are associated to communications performed. Furthermore, geo-location of an event may be also attached to other online services, such as social network activities, image uploading, web browsing and any other online action that a user performs from his mobile computing device, also called events.

A processing module (7) called Social Analyzer module receives a feed (8) of incoming CDRs (and/or other online events), which includes geo-location coordinates field of each event, and make a list comprising all the locations previously stored in the CDR database. Then, it is performed a translation of coordinates (in the case that place name (such as name of restaurant or a national park) is not indicated by the user previously and included inside the event) to define for each location of the list, the nearest point of interest, being the points of interest a list of places previously provided, and registers (9) user's location in a places database (10) together with its location. Once there is a list of points of interest obtained from the location and data usage of other users, different criteria can be followed to rank the points of interest and lately provide to a user. This process is incremental, so that over time, the places database includes for each point of interest a list of users that performed their activity at that place, including date and time of the activity. The implementation of an analyzer is done, according to one embodiment of the invention, as a MapReduce job over a system such as Hadoop, that enables to analyze and aggregate in parallel a very large number of simultaneously incoming events, and aggregate them per place entry.

In one particular embodiment of the present invention, a user asks (11) to a Places Service (12) for showing a map with graphical indication of most popular places. The user can include an interested location (his current one detected from his mobile device or another different one that the user selects). An indication of place popularity is done as a place mark on the map, with a different colour or size according, for example, to the number of all users or user's contacts (13) that have been performing online activity as indicated in the Places Database (10) within a configurable distance from each coordinate. Optionally a mobile application may show to the user a choice of places (14) by looking up (15) places located nearby current user's coordinates in the place service (12).

According to another embodiment of the invention, the user X (3) uploads (16) a list of his contacts through a contacts service (17) to a contacts database (13). Then, user X can request, establishing a communication (11) with a place service (12), which can access to the lists of contacts stored in the contacts database (13), to send a message to all the user contacts that are listed in the places database (10) as performing activity within configurable interval (e.g. last 30 minutes) to announce his location and invite to communicate and optionally providing additional information or recommendations about a location of his concern. About privacy of users, the identity of the users listed in a place of the places database is not disclosed without agreement. Some users may not want to share his location or recommendations about certain places, as a night club for example, Activity is understood as producing any type of event as mentioned before like calls, SMS, MMS, video calls, image uploading, web browsing, social network activities or any other online action.

In another embodiment of the invention the user filter the results offered by the invention and only the data usage of people from his contacts list are taking into account for making the ranking. So, any variation of time filters and distance filters can be applied to optimize the search. For example, it can be set a distance of 300 meters around a certain location to request for points of interest. Only data usage of users within said 300 meters are taking into account to rank the points of interest and then, the results can be also filter to discard the data usage of users who are not in the contact list of the user.

The contact list of the user comprises the telephone numbers of people that the user keep stored in his mobile terminal, being a contact an entry in a database with an identifier for each person.

## Claims

1. A method for providing points of interest to a user of a communication service based on a location, the method is **characterized by** comprising the steps of:
a) obtaining data usage from other users of the communication service (1);
b) associating (5) a location to the data usage of the other users;
c) storing (6) the location associated to the data usage in a database;
d) making a list (7) comprising locations stored in the database;
e) defining (14) for each location of the list, the nearest point of interest, being the points of interest a list of places previously provided;
f) the user providing a location and requesting (11) for the points of interest within a certain distance from the location provided by the user;
g) ranking the points of interest within the certain distance according to the data usage of other users;
h) providing the user the ranked list of points of interest.

2. Method according to claim 1 further comprising the step of the user uploading (16) a contact list to a contact database (13).

3. Method according to previous claims wherein the data usage of users who are not stored in the contact database are discarded.

4. Method according to any one of previous claims further comprising discarding the data usage of users outside a time window.

5. Method according to any one of previous claims wherein the data usage comprise events selected from the following list: calls, SMS, MMS, video calls, IM, email, image uploading, web browsing, social network activities or any other online action.

6. Method according to any one of previous claims wherein the data usage comprise events from the call detail records (CDRs).

7. Method according to any of claims 5 or 6 further comprising ranking the points of interest according to the number of events generated.

8. Method according to any one of previous claims wherein the location provided by the user is obtained by a GPS module embedded in a terminal mobile.

9. Method according to any one of previous claims wherein the locations are defined by geographical coordinates.

10. Method according to any one of previous claims further comprising the user sending his location to a server, being said location available for all the users of the communication service, and requesting for communicating with users who have performed communications or registered online events within a certain distance from the location of the user without disclosing which other users have produced events at that place.

11. Method according to any one of previous claims further comprising the user sending a request for communication to all the users of the communication service whose data usage has been associated to a point of interest within a time window, being the identities of the users preserved.

12. System for providing points of interest to a user of a communication service based on a location, the system is **characterized by** comprising:
- a database (6) for storing data usage of users and locations;
- a processing module (7) for making a list comprising locations stored in the database associated to the users and the data usage;
- a distance module to defining for each location of the list, the nearest point of interest, being the points of interest a list of places previously provided;
- a places database (10) for storing the points of interest;
- a service module (12) for ranking the points of interest and providing the user the ranked list of points of interest.

13. System according to claim 12 further comprising a contact database to store a contact list of the user.

14. A computer program product comprising computer program code adapted to perform the method according to any of the claims 1-11 when said program code is executed on a computer, a digital signal processor, a field-programmable gate array, an application-specific integrated circuit, a micro-processor, a micro-controller, or any other form of programmable hardware.

15. A digital data storage medium storing a computer program product comprising instructions causing a computer executing the program, to perform all steps of a method according to any of claims 1-11.
